(19) Europäisches Patentamt
European Patent Office
Office européen des brevets

(11) **EP 2 651 597 B1**

(12) **EUROPÄISCHE PATENTSCHRIFT**

(45) Veröffentlichungstag und Bekanntmachung des Hinweises auf die Patenterteilung:
**02.03.2016  Patentblatt 2016/09**

(21) Anmeldenummer: **11785626.0**

(22) Anmeldetag: **03.11.2011**

(51) Int Cl.:
***B23K 26/36*** *(2014.01)*

(86) Internationale Anmeldenummer:
**PCT/EP2011/069320**

(87) Internationale Veröffentlichungsnummer:
**WO 2012/079834 (21.06.2012 Gazette 2012/25)**

(54) **VERFAHREN ZUM ABTRAGEN VON MATERIAL MITTELS EINER LASERSTRAHLQUELLE**

PROCESS FOR LASER BEAM ABLATION OF A WORKPIECE

PROCEDE D'ABLATION D'UNE PIECE PAR LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2010  DE 102010063037**

(43) Veröffentlichungstag der Anmeldung:
**23.10.2013  Patentblatt 2013/43**

(73) Patentinhaber: **Robert Bosch GmbH**
**70442 Stuttgart (DE)**

(72) Erfinder: **KITTEL, Sonja**
**70372 Stuttgart (DE)**

(56) Entgegenhaltungen:
WO-A1-2010/037346          DE-A1- 4 202 941
DE-U1- 9 108 809          US-A- 5 578 228
US-A1- 2002 130 113          US-B1- 6 215 094

EP 2 651 597 B1

**Beschreibung**

Die Erfindung betrifft ein Verfahren zum Abtragen von Material mittels einer Laserstrahlquelle. Aus dem Dokument DE 9 108 809 U1, das dem Oberbegriff vom Anspruch 1 zugrundeliegt, ist Verfahren zum Hachgeschwindigkeitsschneiden bekannt.

Ein derartiges Verfahren ist auch beispielsweise zum Gravieren bzw. Beschriften von Bauteilen bekannt. Hierbei wird ein Laserstrahl hoher Intensität auf das Bauteil fokussiert und das Material im bestrahlten Bereich verdampft. So können kleine Mengen an Material hochpräzise abgetragen werden, wobei die Abtragraten zurzeit bis ca. 0,6 g/min betragen. Hierbei steht die Präzision der Abtragung in einem umgekehrt proportionalen Zusammenhang mit der Abtragrate. Für den Abtragprozess sind sehr hohe Intensitäten des Laserstrahls erforderlich. Daher werden hierfür gepulste Laserstrahlquellen verwendet, die hohe Spitzenleistungen bei geringen Pulsdauern aufweisen. Hierbei ist der Zusammenhang zwischen der Pulsdauer und der Abtragmenge derart, dass je kürzer die Pulsdauer ist, desto weniger Schmelze erzeugt wird, und desto präziser der Abtrag erfolgt.

Das Abtragen von Material erfolgt beispielsweise dazu, um bei schnell rotierenden Drehteilen, beispielhaft seien hier Wellen von Turboladern genannt, ein Auswuchten des Drehteiles zu ermöglichen. Hierbei steht das Abtragen von Material an dem Drehteil als Alternative zu dem ebenfalls bekannten Verfahren, bei dem zusätzliche Gewichte an den Drehteilen befestigt werden, um die benötigten relativ kleinen Unwuchten der Drehteile zu erzielen.

Darüber hinaus ist es bekannt, dass beim Laserschweißen zwei Schweißmethoden bzw. Schweißverfahren existieren: Das Wärmeleitungsschweißen und das Tiefschweißen. Während beim Wärmeleitungsschweißen der Werkstoff in der Wechselwirkungszone des Laserstrahls nur aufgeschmolzen wird und im Anschluss daran wieder erstarrt, wird beim Tiefschweißen aufgrund der hohen Intensität des Laserstrahls der Werkstoff verdampft. Hierbei entsteht durch den Dampfdruck eine sogenannte Dampfkapillare. Bei der Bewegung des Laserstrahls relativ zum Werkstück entstehen verschiedene Strömungen des Schmelzbades um die Dampfkapillare, wobei zumindest eine in etwa vertikal ausgerichtete und eine in etwa horizontal ausgerichtete Kapillarumströmung erzeugt werden. Beim Tiefschweißen mit geringen Vorschubgeschwindigkeiten, gemeint sind hier Vorschubgeschwindigkeiten insbesondere kleiner 20 m/min, bildet sich eine Schmelzbadwanne aus geschmolzenem Material, in der die Schmelze sowohl mit als auch gegen die Vorschubrichtung des Laserstrahls bewegt wird. Dadurch erfolgt eine Durchmischung der Schmelze, und nach der Erstarrung entsteht die Schweißnaht.

Offenbarung der Erfindung

Ausgehend von dem dargestellten Stand der Technik liegt der Erfindung die Aufgabe zugrunde, ein Verfahren zum Abtragen von Material mittels einer Laserstrahlquelle derart weiterzubilden, dass dieses dazu geeignet ist, relativ große Abtragsraten zu erzielen. Diese Aufgabe wird erfindungsgemäß bei einem Verfahren zum Abtragen von Material mittels einer Laserstrahlquelle mit den Merkmalen des Anspruchs 1 gelöst. Erfindungsgemäß wird hierbei vorgeschlagen, dass der Laserstrahl relativ zum Werkstück eine Vorschubgeschwindigkeit zwischen 20 m/min und 80 m/min aufweist und dass der Laserstrahl eine Strahlintensität von > $10^6$ W/cm$^2$ aufweist. Es hat sich nämlich überraschenderweise herausgestellt, dass trotz der gegenüber den bekannten Verfahren erhöhten Vorschubgeschwindigkeit eine Dampfkapillare weiterhin bestehen bleibt, wenn hierbei ein Laserstrahl mit ausreichend hoher Strahlintensität eingesetzt wird. Mittels dem im Anspruch 1 beanspruchten Verfahren kommt es nicht oder zumindest nur in sehr geringem Maße zu einem Verdampfen des Materials, hingegen wird das verflüssigte Material durch die hohe Schmelzbaddynamik aus der Schmelzzone besonders gut abtransportiert, insbesondere herausgeschleudert, wodurch sich die hohen Abtragsraten erzielen lassen. Der Effekt des Herausschleuderns der Schmelze aufgrund der Schmelzdynamik zeigt sich besonders bei Vorschubgeschwindigkeiten von > 40 m/min, bevorzugt bei > 60 m/min.

Vorteilhafte Weiterbildungen des erfindungsgemäßen Verfahrens zum Abtragen von Material mittels einer Laserstrahlquelle sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Das Verfahren eignet sich beispielsweise zum Abtragen verschiedener metallischer Materialien, z.B. Edelstahl. Besonders hohe Abtragungsraten werden dadurch erzielt, wenn als Strahlungsquellen brillante Strahlungsquellen vorgesehen werden. Derartige Strahlungsquellen weisen eine hohe Strahlqualität auf. Die Strahlungsqualität ist insbesondere durch die Fokussierung des Laserstrahls auf kleinste Fokusdurchmesser charakterisiert. Besonders gute Ergebnisse zeigen sich hierbei bei einem Laserstrahldurchmesser von < 150 μm, bevorzugt < 100 μm. Ebenso ist es üblich die Strahlqualität durch eine Strahlqualitätszahl K anzugeben. Bevorzugt wird erfindungsgemäß eine Strahlqualitätszahl k von zumindest annähernd 1,0 vorgesehen.

Das verflüssigte Material wird aus seiner Abtrag- bzw. Schmelzzone herausgeschleudert Dadurch werden keine zusätzlichen Einrichtungen benötigt, die das Material aktiv entfernen. Ein derartiges Herausschleudern des Materials erfolgt insbesondere dadurch, dass aufgrund des Schweißprozesses die Schmelze eine hohe Schmelzbaddynamik aufweist. Diese Schmelzbaddynamik kann ggf. noch dadurch unterstützt werden, dass das betroffene Bauteil sehr schnell bewegt bzw. beschleunigt wird.

Besonders bevorzugt ist es weiterhin, dass zumindest der Bereich der Abtragzone mit einem Arbeitsgas, insbesondere Argon, Helium oder Stickstoff beaufschlagt wird. Mit einer derartigen Beaufschlagung der Abtragszone mit Arbeitsgas werden eine verbesserte Austreibung der Schmelze, eine Vermeidung von Ablagerungen von Materialspritzern sowie eine Verbesserung der Oberflächenqualität ermöglicht.

Das Verfahren findet weiterhin Verwendung bei Abtragsverfahren, bei denen das Abtragsvolumen an Material mehr als 0,6 g/min beträgt.

Um insbesondere ein einfaches Entfernen der Schmelze bzw. des abgetragenen Materials zu ermöglichen, ist es weiterhin vorteilhaft, wenn das Werkstück relativ zum Laserstrahl bewegt, insbesondere gedreht wird.

Alternativ hierzu ist es jedoch auch möglich, dass der Laserstrahl relativ zum Werkstück mittels einer optischen Einrichtung bewegt, insbesondere rotativ bewegt wird.

In einer besonders bevorzugten Variante des erfindungsgemäßen Verfahrens ist es vorgesehen, dass während des Abtragens des Materials die Rundlaufeigenschaften, insbesondere die Unwucht des Werkstücks, erfasst wird. Ein derartiges Verfahren eignet sich somit insbesondere zum Auswuchten von sich drehenden Bauteilen, z.B. von schnelldrehenden Wellen von Turboladern.

Mittels des vorgeschlagenen, erfindungsgemäßen Verfahrens lassen sich relativ große Abtragsraten an Material ermöglichen, wodurch das Verfahren in der Fertigung eine relativ hohe Leistung bzw. Produktivität ermöglicht. Um darüber hinaus bei erhöhten Anforderungen ein feineres bzw. genaueres Abtragen zu ermöglichen, wird es in einer weiteren vorteilhaften Variante des Verfahrens vorgeschlagen, dass das Werkstück nach dem Abtragen des Materials einem zusätzlichen Verfahren zum Abtragen von weiterem Material unterzogen wird.

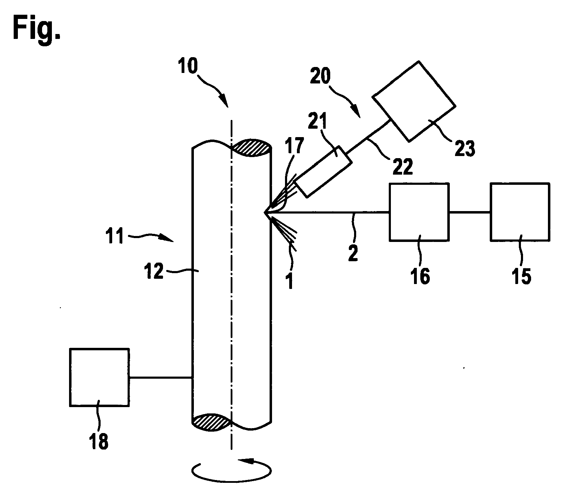

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in der einzigen Figur eine Anordnung zum Abtragen von Material an einer sich drehenden Welle in einer vereinfachten Seitenansicht.

In der einzigen Figur ist eine Anordnung 10 zum Abtragen von Material 1 an einem Werkstück 11 mittels eines Laserstrahls 2 dargestellt. Bei dem Werkstück 11 handelt es sich im dargestellten Ausführungsbeispiel um eine Welle 12, die z.B. die Welle 12 eines Abgasturboladers ist.

Der Laserstrahl 2 wird mittels einer Laserstrahlquelle 15 mit hoher Strahlqualität erzeugt, die im Ausführungsbeispiel als kontinuierlich ausgebildete Laserstrahlquelle 15 ausgebildet ist. Es ist jedoch auch möglich, eine gepulste Laserstrahlquelle 15 vorzusehen. Der mittels der Laserstrahlquelle 15 erzeugte kontinuierliche Laserstrahl 2 wird hierbei ggf. mittels einer Optikeinrichtung 16 geführt bzw. ausgerichtet sowie verformt und trifft auf das Werkstück 11 im Bereich einer Schmelzzone 17 in fokussierter Form auf. Dabei weist der Laserstrahl bevorzugt einen Laserstrahldurchmesser von < 100 $\mu$m auf. Ferner weist die Laserstrahlquelle 15 bevorzugt eine Leistung von größer 100 Watt auf, was typischerweise weniger ist als die Spitzenleistung einer gepulsten Laserstrahlquelle. Weiterhin weist der mit der Laserstrahlquelle 15 erzeugte Laserstrahl 2 eine Strahlqualitätszahl K von zumindest annähernd 1,0 auf.

Hierbei wird unter der Strahlqualitätszahl K verstanden:

$$K = 1 / M^2$$

Wobei unter $M^2$ die Beugungsmaßzahl verstanden wird, wie sie in der ISO-Norm 11146 beschrieben ist.

Das Werkstück 11 wird im Bereich der Schmelzzone 17 relativ zum Laserstrahl 2 bewegt. Hierzu ist eine im Einzelnen nicht näher dargestellte Einrichtung 18 vorgesehen, die in Wirkverbindung mit dem Werkstück 11 angeordnet ist und das Werkstück 11 in eine Drehbewegung versetzt. Wesentlich hierbei ist, dass durch die Drehbewegung zwischen dem Werkstück 11 und dem Laserstrahl 2 im Bereich der Schmelzzone 17 eine Relativgeschwindigkeit zwischen dem Werkstück 11 und dem Laserstrahl 2 von bevorzugt größer 60 m/min erzielt wird. Eine derartige Relativgeschwindigkeit ist gleichbedeutend mit einer Vorschubgeschwindigkeit des Laserstrahls 2 relativ zum Werkstück 11.

Zur Verbesserung des Abtragungsprozesses ist weiterhin optional eine Einrichtung 20 zum Zuführen von Arbeitsgas, insbesondere Argon, Helium oder Stickstoff vorgesehen. Hierbei umfasst die Einrichtung 20 eine Gasdüse 21, die über eine Leitung 22 mit einem Gasspeicher 23 für das Arbeitsgas verbunden ist.

Mittels einer derart ausgebildeten Anordnung 10 wird ein Abtrag von Material 1 aus der Schmelzzone 17 bewirkt, der dadurch entsteht, dass in Folge des Laserstrahls 2 mit der beschriebenen Strahlcharakteristik eine Dampfkapillare im Bereich der Schmelzzone 17 erzeugt wird. Hierbei wird das aufgeschmolzene Material durch die hohe Schmelzbaddynamik aus der Schmelzzone 17 abtransportiert, insbesondere herausgeschleudert. Dadurch wird eine relativ große Abtragmenge von größer 0,6 g/min an Material 1 erzielt.

Falls es sich bei dem Werkstück 11 um ein auszuwuchtendes Bauteil, insbesondere eine Welle 12 handelt, kann beispielsweise durch zeitweises Abschalten der (kontinuierlichen) Laserstrahleinrichtung 15, eine gezielte Ablenkung des Laserstrahls 2 aus der Schmelzzone 17 oder aber die Verwendung einer gepulsten Laserstrahlquelle ein einseitiger Materialabtrag erfolgen, der zur Unwuchtbeseitigung dient.

In Abwandlung des dargestellten Ausführungsbeispiels ist es auch möglich, das Werkstück 11 ortsfest bzw. starr anzuordnen, während der Laserstrahl 2 mit der für das erfindungsgemäße Verfahren charakteristischen Vorschubgeschwindigkeit von bevorzugt größer 60 m/min relativ zum Werkstück 11 bewegt wird. Hierzu kann eine optische Einrichtung vorgesehen sein, wie sie bereits aus dem Stand der Technik bekannt ist. Auch ist es möglich, die Rundlaufeigenschaften, insbesondere die Unwucht des Werkstücks 11 bzw. der Welle 12 während des Abtragprozesses des Materials 1 mittels geeigneter Einrichtungen zu messen und die Ergebnisse einer Steuereinrichtung zuzuführen, die die Laserstrahlquelle 15 bzw. den Laserstrahl 2 im Sinne einer zu erzielenden geringen Unwucht ansteuert und dann den Abtragprozess stoppt.

Anstelle einer Gasdüse 21 zur Zuführung eines Arbeitsgases kann es selbstverständlich auch vorgesehen sein, den gesamten Bereich bzw. das gesamte Werkstück 11 in einem Raum anzuordnen, in dem Arbeitsgas vorhanden ist, z.B. in einer abgeschlossenen Bearbeitungskammer.

Weiterhin ist es denkbar, dass anstelle eines sich drehenden Werkstücks 11 z.B. plattenförmige Materialien bzw. Gegenstände, wie sie insbesondere in der Halbleiterindustrie verwendet werden, bearbeitet werden. Derartige, insbesondere in der Mikrosystemtechnik und Photovoltaik verwendete Materialien bestehen insbesondere aus Silizium und dazu gehörigen Schichtbildnern. Das erfindungsgemäße Verfahren ist somit nicht auf Werkstücke 11 aus metallischen Werkstoffen, beispielsweise aus Stahl oder Aluminium, beschränkt. Zuletzt ist es auch möglich, von dem Werkstück 11 vor oder nach dem beschriebenen Abtragverfahren durch den Laserstrahl 2 durch ein weiteres Abtragverfahren Material 1 zu entfernen.

## Patentansprüche

1. Verfahren zum Abtragen von Material (1) mittels eines von einer Laserstrahlquelle (15) erzeugten Laserstrahls (2) mit einem Laserstrahldurchmesser d, wobei der Laserstrahl (2) auf eine als Schmelzzone (17) ausgebildete Abtragzone eines Werkstückes (11) geleitet wird, wobei das Material (1) in der Abtragzone bis auf eine Temperatur erhitzt wird, in der das Material (1) verflüssigt und teilweise verdampft wird, wobei der Laserstrahl (2) relativ zum Werkstück (11) eine Vorschubgeschwindigkeit zwischen 20 m/min und 100 m/min aufweist, wobei der Laserstrahl (2) eine Strahlintensität von $>10^6$ W/cm$^2$ aufweist,
dadurch gekennzeichnet, dass der Laserstrahl (2) als kontinuierlicher Laserstrahl (2) ausgebildet ist,
der Laserstrahldurchmesser d < 150 $\mu$m, insbesondere < 100 $\mu$m beträgt, dass das verflüssigte Material (1) aus seiner Abtragzone aufgrund der Schmelzbaddynamik herausgeschleudert wird, und dass das Abtragsvolumen an Material mehr als 0,6 g/min beträgt.

2. Verfahren nach Anspruch 1,
dadurch gekennzeichnet, dass
die Vorschubgeschwindigkeit > 40 m/min insbesondere > 60 m/min, beträgt.

3. Verfahren nach Anspruch 1 oder 2,
dadurch gekennzeichnet,
dass zumindest der Bereich der Schmelzzone (17) mit einem Arbeitsgas, insbesondere mit Argon, Helium oder Stickstoff beaufschlagt wird.

4. Verfahren nach mindestens einem der vorhergehenden Ansprüche,
dadurch gekennzeichnet,
dass das Werkstück (11) relativ zum Laserstrahl (2) bewegt, insbesondere mittels einer Einrichtung (18) gedreht wird.

5. Verfahren nach mindestens einem der vorhergehenden Ansprüche,
dadurch gekennzeichnet,
dass der Laserstrahl (2) relativ zum Werkstück (11) mittels einer optischen Einrichtung bewegt, insbesondere rotativ bewegt wird.

6. Verfahren nach mindestens einem der vorhergehenden Ansprüche,
dadurch gekennzeichnet,
dass als Werkstück (11) ein zumindest in der Abtragzone rotationssymmetrisch ausgebildetes Werkstück (11), insbesondere eine Welle (12) eines Turboladers, verwendet wird.

7. Verfahren nach mindestens einem der vorhergehenden Ansprüche,
**dadurch gekennzeichnet,**
**dass** als Werkstück (11) ein zumindest in der Abtragzone ebenes Werkstück, insbesondere ein aus Silizium und dazugehörigen Schichtbildner bestehendes Werkstück oder ein Werkstück aus Edelstahl verwendet wird.

8. Verfahren nach mindestens einem der vorhergehenden Ansprüche,
**dadurch gekennzeichnet,**
**dass** während des Abtragens des Materials (1) die Rundlaufeigenschaften, insbesondere die Unwucht des Werkstücks (11), erfasst werden.

9. Verfahren nach mindestens einem der vorhergehenden Ansprüche,
**dadurch gekennzeichnet,**
**dass** das Werkstück (11) nach oder vor dem Abtragen des Materials (1) einem zusätzlichen Verfahren zum Abtragen von zusätzlichem Material (1) unterzogen wird.

## Claims

1. Method for removing material (1) by means of a laser beam (2) which is generated by a laser beam source (15) and has a laser beam diameter d, wherein the laser beam (2) is directed onto a removal zone of a workpiece (11) that is formed as a melting zone (17), wherein the material (1) in the removal zone is heated up to a temperature at which the material (1) is liquefied and partially vaporized, wherein the laser beam (2) has a speed of advance in relation to the workpiece (11) of between 20 m/min and 100 m/min, and wherein the laser beam (2) has a beam intensity of $> 10^6$ W/cm$^2$,
**characterized in that**
the laser beam (2) is in the form of a continuous laser beam (2), **in that** the laser beam diameter d is $< 150 \ \mu$m, in particular $< 100 \ \mu$m, **in that** the liquefied material (1) is thrown out of its removal zone on account of the molten bath dynamics, and **in that** the volume of material removed is more than 0.6 g/min.

2. Method according to Claim 1,
**characterized in that**
the speed of advance is $> 40$ m/min, in particular $> 60$ m/min.

3. Method according to Claim 1 or 2,
**characterized**
**in that** at least the region of the melting zone (17) is exposed to a working gas, in particular to argon, helium or nitrogen.

4. Method according to at least one of the preceding claims,
**characterized**
**in that** the workpiece (11) is moved, in particular rotated by means of a device (18), in relation to the laser beam (2).

5. Method according to at least one of the preceding claims,
**characterized**
**in that** the laser beam (2) is moved, in particular moved rotationally, in relation to the workpiece (11) by means of an optical device.

6. Method according to at least one of the preceding claims,
**characterized**
**in that** the workpiece (11) used is a workpiece (11) of rotationally symmetrical form at least in the removal zone, in particular a shaft (12) of a turbocharger.

7. Method according to at least one of the preceding claims,
**characterized**
**in that** the workpiece (11) used is a workpiece that is planar at least in the removal zone, in particular a workpiece consisting of silicon and associated layer formers or a workpiece consisting of high-grade steel.

8. Method according to at least one of the preceding claims,
**characterized**

**in that** the true running characteristics, in particular the imbalance of the workpiece (11), are detected during the removal of the material (1).

9. Method according to at least one of the preceding claims,
   **characterized**
   **in that**, after or before the removal of the material (1), the workpiece (11) is subjected to an additional method for removing additional material (1).


**Revendications**

1. Procédé d'enlèvement de matière (1) au moyen d'un faisceau laser (2) généré par une source de faisceau laser (15), comprenant un diamètre de faisceau laser d, le faisceau laser (2) étant guidé sur une zone d'enlèvement d'une pièce (11) réalisée sous forme de zone de fusion (17), la matière (1) étant chauffée dans la zone d'enlèvement jusqu'à une température à laquelle la matière (1) se liquéfie et est partiellement évaporée, le faisceau laser (2) présentant, par rapport à la pièce (11), une vitesse d'avance entre 20 m/min et 100 m/min et le faisceau laser (2) présentant une intensité de faisceau supérieure à $10^6$ W/cm$^2$,
   **caractérisé en ce que** le faisceau laser (2) est réalisé sous forme de faisceau laser continu (2), le diamètre du faisceau laser d est < 150 $\mu$m, en particulier < 100 $\mu$m, la matière liquéfiée (1) est expulsée de sa zone d'enlèvement sous l'effet de la dynamique des bains de fusion et le volume d'enlèvement de matière est supérieur à 0,6 g/min.

2. Procédé selon la revendication 1,
   **caractérisé en ce que**
   la vitesse d'avance est > 40 m/min, en particulier > 60 m/min.

3. Procédé selon la revendication 1 ou 2,
   **caractérisé en ce que**
   au moins la région de la zone de fusion (17) est sollicitée avec un gaz de travail, en particulier avec de l'argon, de l'hélium ou de l'azote.

4. Procédé selon au moins l'une quelconque des revendications précédentes,
   **caractérisé en ce que**
   la pièce (11) est déplacée par rapport au faisceau laser (2), en particulier est tournée au moyen d'un dispositif (18).

5. Procédé selon au moins l'une quelconque des revendications précédentes,
   **caractérisé en ce que**
   le faisceau laser (2) est déplacé par rapport à la pièce (11) au moyen d'un dispositif optique, en particulier est déplacé en rotation.

6. Procédé selon au moins l'une quelconque des revendications précédentes,
   **caractérisé en ce**
   **qu'**une pièce (11) réalisée au moins dans la zone d'enlèvement avec une symétrie de révolution, en particulier un arbre (12) d'un turbocompresseur, est utilisée en tant que pièce (11).

7. Procédé selon au moins l'une quelconque des revendications précédentes,
   **caractérisé en ce que**
   une pièce plane au moins dans la zone d'enlèvement, en particulier une pièce constituée de silicium et d'éléments de formation de couches associés, ou une pièce en acier inoxydable, est utilisée en tant que pièce (11).

8. Procédé selon au moins l'une quelconque des revendications précédentes,
   **caractérisé en ce que**
   pendant l'enlèvement de la matière (1), les propriétés de concentricité, en particulier le déséquilibre de la pièce (11), sont détectées.

9. Procédé selon au moins l'une quelconque des revendications précédentes, **caractérisé en ce que** la pièce (11) avant ou après l'enlèvement de la matière (1) est soumise à un procédé supplémentaire d'enlèvement de matière supplémentaire (1).

**Fig.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9108809 U1